# EUROPÄISCHE PATENTANMELDUNG

(11) **EP 0 745 430 A2**
(43) Veröffentlichungstag der Anmeldung: **04.12.1996**
(21) Anmeldenummer: 96103769.4
(22) Anmeldetag: 11.03.1996
(51) Int. Cl.: B05B 15/04, B05B 15/12

(54) **Reinigungsverfahren und Reinigungsvorrichtung für Beschichtungspulver**

(30) Priorität: 03.06.1995 DE 19520498
(71) Anmelder: Gema Volstatic AG, 9015 St. Gallen (CH)
(72) Erfinder: Gelain, Silvano, 9030 Abtwil (CH)
(74) Vertreter: Vetter, Ewald Otto, Dipl.-Ing.

(57) **Zusammenfassung**

Von den Oberflächen einer Pulversprühbeschichtungskabine werden Beschichtungspulverpartikel abgesaugt (8, 9, 14). In der Luft auf der zu reinigenden Oberfläche (1) werden mittels einer Hochspannungs-Ionisiervorrichtung (20) Ionen erzeugt, welche von Pulverpartikeln und der zu reinigenden Oberfläche (1), wenn sie ein anderes elektrisches Ladungspotential haben, elektrisch angezogen werden. Damit werden die Pulverpartikel elektrisch neutralisiert und die Anziehung zwischen den Pulverpartikeln und der zu reinigenden Oberfläche (1) wird eliminiert. Dadurch können mehr Pulverpartikel von einem Saugluftstrom (14) auf der zu reinigenden Oberfläche (1) erfaßt und abgesaugt werden.

## Beschreibung

Beim Sprühbeschichten von Gegenständen mit Beschichtungspulver in Beschichtungskabinen haftet Beschichtungspulver nicht nur an dem zu beschichtenden Gegenstand, sondern auch an den Oberflächen der Beschichtungskabine. Zum Entfernen von Beschichtungspulver von Oberflächen der Beschichtungskabine werden beim Stand der Technik Saugdüsen, Blasdüsen, Bürsten und Tücher verwendet, welche von Hand oder maschinell betätigt werden. Das Beschichtungspulver besteht in den meisten Fällen aus Kunststoff, kann jedoch auch aus Keramik oder anderen Materialien bestehen. Die Kabinenwände bestehen meistens aus Metall oder Kunststoff oder aus kunststoffbeschichtetem Metall. Die Kabinendecke und der Kabinenboden können aus den gleichen Materialien bestehen. Gemäß einer besonderen Ausführungsform besteht der Boden aus einem endlosen umlaufenden Filterband, welches auf dieses Filterband fallendes Beschichtungspulver aus der Kabine heraustransportiert, damit das Beschichtungspulver außerhalb von der Kabine vom Filterband abgesaugt und für eine Wiederverwendung zurückgewonnen werden kann. Von der Kabinendecke und den Kabinenwänden mittels einer Reinigungsvorrichtung entferntes Beschichtungspulver wird normalerweise nicht für die Wiederverwendung zurückgewonnen, sondern als Abfall behandelt. Insbesondere beim elektrostatischen Sprühbeschichtungsverfahren, bei welchem ein elektrisches Hochspannungsfeld zwischen einer Sprühvorrichtung und dem zu beschichtenden Objekt erzeugt wird, entstehen an den Teilen der Kabine, den zu beschichtenden Gegenständen und dem Beschichtungspulver unterschiedliche elektrische Ladungen. Diese unterschiedlichen elektrischen Ladungen sind erwünscht zwischen den Pulverpartikeln und den zu beschichtenden Gegenständen, damit die Pulverpartikel von den Gegenständen angezogen werden und darauf besser haften. Eine Haftung der Pulverpartikel an den Oberflächen der Beschichtungskabine ist jedoch unerwünscht, weil sie das Entfernen von darauf haftenden Pulverpartikeln erschweren.

Durch die Erfindung soll die Aufgabe gelöst werden, die erwünschte elektrostatische Anziehung der Pulverpartikel von den zu beschichtenden Gegenständen aufrecht zu erhalten, jedoch elektrische Anziehungskräfte zwischen Beschichtungsmaterial und Oberflächen der Beschichtungskabine zu verhindern oder zumindest soweit zu reduzieren, daß sich das Beschichtungspulver leichter von den Kabinenoberflächen entfernen läßt.

Diese Aufgabe wird gemäß der Erfindung durch die unabhängigen Patentansprüche gelöst.

Bevorzugte Ausführungsformen der Erfindung sind in den Unteransprüchen enthalten.

Die Erfindung betrifft die Verwendung der hier im folgenden beschriebenen Technik, welche zum elektrischen Neutralisieren und zum Entstauben von Papierbahnen und Kunststoffbahnen entwickelt wurde, welche mit hoher Geschwindigkeit durch ihre Herstellungsmaschinen und durch ihre Bearbeitungsmaschinen, beispielsweise Druckmaschinen, laufen, wobei sich hohe elektrostatische Ladungen aufbauen, die Staub und anderen Schmutz anziehen und dadurch die Produktqualität negativ beeinträchtigen.

Mit der bekannten Technik werden die schnelllaufenden Materialbahnen ionisiert und abgesaugt, wobei die Ionisier- und Absaugvorrichtung zur Entfernung von Staubpartikeln kleiner als 25 Mikron geeignet und ortsfest angeordnet ist, so daß die Materialbahn an dieser Ionisier- und Absaugvorrichtung vorbeibewegt wird. Die bekannte Ionisier- und Absaugvorrichtung besteht aus einer oder mehreren Absaughauben, die mit Ionisierstäben, Rohren für Druckluft und bei Bedarf auch mit Bürsten ausgestattet sind. Ferner ist ein hochfeiner Filter vorgesehen, welcher die abgesaugten Staubpartikel aus dem Saugluftstrom absaugt. Die bekannte Ionisier- und Absaugvorrichtung ist so angeordnet, daß die laufende Materialbahn zuerst an einer Bürste und dann an einem Saugluftstrom-Kanal vorbeiläuft. Die Ionisiervorrichtung enthält mindestens einen Ionisierungsstab, der eine Vielzahl von Metallspitzen als Hochspannungs-Ionisierelektroden aufweist, die an Hochspannung, beispielsweise 4000 Volt Wechselstrom, angeschlossen sind und dadurch in ihrer Nähe vorhandene Luft-Moleküle in positive und negative Ionen aufspalten. Da sich unterschiedliche oder gegenpolige elektrische oder elektromagnetische Ladungen anziehen, wird jedes elektrisch andersartig aufgeladene Material, welches in den Wirkungsbereich eines Ionisierstabes gelangt, zwangsläufig elektrisch neutralisiert. Das auf diese Weise neutralisierte Material wird nicht mehr von anderen Materialien oder Maschinenteilen angezogen. Durch Elektrostatik erzeugte Anziehung von Staubpartikeln, die Gefahr einer Explosion oder eines Brandes bei Verarbeitung von Lösungsmitteln, und elektrische Überschläge werden auf diese Weise wirksam verhindert. Die Ionisierstäbe sind in zwei grundsätzlichen Ausführungen bekannt, nämlich einer "berührungssicheren" und einer "nichtberührungssicheren" Form. Bei der "berührungssicheren" Ausführungsform sind die Metallspitzen oder Elektroden mit einem Hochspannungskabel kapazitiv gekoppelt. Dadurch kann kein schädlicher elektrischer Schlag entstehen, wenn eine Person versehentlich eine dieser Hochspannungselektroden berührt. Ein weiterer Vorteil dieser Ausführungsform ist, daß die gewünschte Ionisierungsfunktion auch dann noch erhalten bleibt, wenn einige der Hochspannungselektroden beispielsweise durch Schmutz kurzgeschlossen sind. Bei der "nichtberührungssicheren" Ausführungsform sind die als Hochspannungselektroden dienenden Metallspitzen direkt mit dem Hochspannungskabel verbunden und daher nicht berührungssicher. Ionisierungsstäbe dieser Ausführungsform dürfen deshalb nur an Stellen montiert werden, bei denen man sicher sein kann, daß keine unbeabsichtigte Berührung durch eine Bedienungsperson stattfindet.

Im Rahmen vorliegender Erfindung kann extern von der Ionisier- und Absaugvorrichtung eine Hochspannungs-Wechselspannungsquelle angeordnet werden, die über ein Hochspannungskabel an die Hochspannungs- Ionisierelektroden angeschlossen ist, oder die Ionisier- und Absaugvorrichtung kann einen Hochspannungs-Wechselspannungserzeuger enthalten, dessen Niederspannungs-Primärseite über ein Niederspannungskabel an eine externe Niederspannungsquelle angeschlossen ist und dessen Hochspannungsausgang an die Hochspannungs-Ionisierelektroden angeschlossen ist. Die Hochspannung der Hochspannungs-Ionisierelektroden kann gleich oder wesentlich weniger oder wesentlich mehr als 4000 Volt Wechselspannung betragen. Als Vergleich wird auf die Hochspannungselektroden von Sprühbeschichtungspistolen verwiesen, welche zum elektrostatischen Aufladen des Beschichtungspulvers beim Versprühen auf einen zu beschichtenden Gegenstand dienen und an Hochspannungs-Gleichspannungen bis 140 kV angeschlossen wurden.

Die Erfindung wird im folgenden mit Bezug auf die Zeichnungen anhand einer bevorzugten Ausführungsform beschrieben. In den Zeichnungen zeigen
- Fig. 1: einen Querschnitt einer Reinigungsvorrichtung nach der Erfindung zum Entfernen von Beschichtungspulver von einer inneren Oberfläche einer Pulver-Sprühbeschichtungskabine, längs der Ebene I-I von Fig. 2, wobei einige Teile weggelasen wurden,
- Fig. 2: schematisch eine Seitenansicht der Reinigungs-Vorrichtung nach Fig. 1, wobei der Zeichnungsmaßstab in Fig. 2 kleiner ist als Fig. 1.

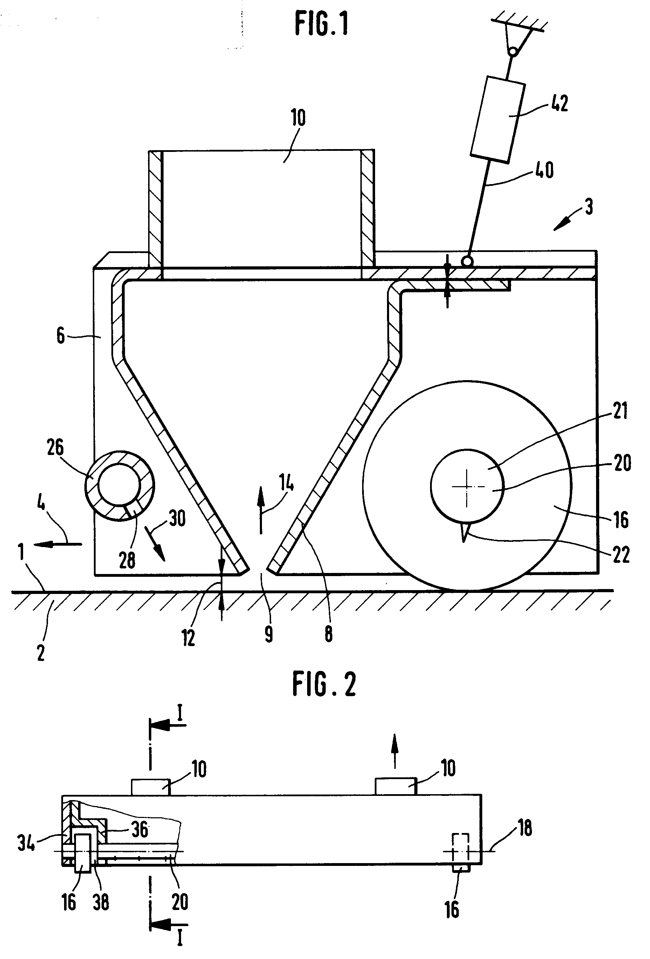

Die Reinigungs-Vorrichtung nach der Erfindung zum Entfernen von Beschichtungspulver von Oberfläche einer Pulversprühbeschichtungskabine ist in den Zeichnungen unmaßstäblich, mit unterschiedlichem Maßstab in den Fig. 1 und 2, und in Fig. 1 um 90° gedreht dargestellt. Dadurch ist in Fig. 1 die in der Praxis vertikale Kabinenwand 2 mit ihrer zu reinigenden Oberfläche 1 horizontal dargestellt. Gemäß einer nicht dargestellten Ausführungsform der Erfindung kann die zu reinigende Oberfläche ein Kabinenboden sein. Die zu reinigende Oberfläche kann ein Filter sein, der eine Kabinenwand oder einen Kabinenboden bildet. Die Pulverpartikel des Beschichtungspulvers haben einen Durchmesser bis zu 100 Mikron, wobei im Durchschnitt nur ungefähr 45% bis 50% von allen Pulverpartikeln einen Durchmesser von weniger als 30 Mikron (µm) haben.

Die Reinigungsvorrichtung 3 bildet eine Baueinheit, welche während des Reinigungsverfahrens in Richtung eines Pfeiles 4 über die ortsfeste Oberfläche 1 parallel zur Ebene dieser Oberfläche 1 bewegt wird. Die Baueinheit dieser Reinigungsvorrichtung 3 enthält ein Gehäuse 6, in welchem eine Saugdüse 8 angeordnet ist, deren Saug-Düsenöffnung 9 quer zur Vorrichtungs-Bewegungsrichtung 4 und parallel zu der zu reinigenden Oberfläche 1 sich erstreckt. Die Saugdüse 8 ist an ihrer von der Saug-Düsenöffnung 9 abgewandten Seite mit mehreren Saugluft-Anschlußstutzen 10 versehen, die über einen nicht dargestellten Filter zum Ausfiltern von Pulverpartikeln an eine ebenfalls nicht dargestellte Saugluftquelle anschließbar sind. Das Gehäuse 6 und der Rand der Saug-Düsenöffnung 9 haben von der zu reinigenden Oberfläche 1 einen kleinen Abstand 12. Die Saugluftquelle erzeugt einen Saugluftstrom, welcher von der zu reinigenden Oberfläche 1 und ihrem angrenzenden Luftraum Pulverpartikel absaugt und durch die Saug-Düsenöffnung 9 in die Saugdüse 8 saugt. Der mit abgesaugten Pulverpartikeln angereicherte Saugluftstrom 14 strömt durch den nicht dargestellten Filter, welcher die Pulverpartikel aus dem Saugluftstrom 14 filtert. Die Saug-Düsenöffnung 9 hat einen so kleinen Querschnitt, daß die Luftmenge des Saugluftstromes 14 im wesentlichen von der Saug-Düsenöffnung 9 bestimmt wird, jedoch nicht wesentlich größer wird, wenn sie sich gegenüber einer Öffnung in der zu reinigenden Oberfläche 1 befindet oder der Abstand 12 sehr groß wird.

Gemäß einer nicht dargestellten, anderen Ausführungsform der Reinigungsvorrichtung 3 kann ein Saugluftanschluß für die Saugluftquelle am stirnseitigen Ende der Saugdüse 8 vorgesehen sein, anstatt der Saugluftanschlußstutzen 10 gegenüber der Saug-Düsenöffnung 9. Damit auch bei dieser abgewandelten Ausführungsform über die gesamte Länge der Saug-Düsenöffnung 9 ein gleichmäßiger Sog oder Unterdruck von der Saugluftquelle erzeugt wird, hat diese Saug-Düsenöffnung 9 bei der abgewandelten Ausführungsform eine in Öffnungslänge kleiner werdende Öffnungsgröße, wobei die Saug-Düsenöffnung 9 an ihrem dem Saugluftanschluß am nächsten gelegenen Ende am kleinsten und an ihrem vom Saugluftanschluß am weitesten entfernten Ende am größten ist.

Im Gehäuse 6 sind mindestens zwei Räder 16 drehbar gelagert, welche auf der zu reinigenden Oberfläche 1 rollen und den Abstand der übrigen Teile der Reinigungsvorrichtung 3, und damit auch den Abstand 12 des Randes der Saug-Düsenöffnung 9 von der zu reinigenden Oberfläche, konstant halten.

Eine Ionisiervorrichtung 20 hat einen im Gehäuse 6 befestigten Stabkörper 21 und eine Vielzahl aus dem Stab herausragende Metallspitzen 22 als Hochspannungs-Ionisierelektroden, die an eine nicht dargestellte Hochspannungs-Wechselspannungsquelle angeschlossen sind. Die Hochspannung spaltet an den Metallspitzen Luft-Moleküle in positive und negative Ionen auf. Die Ionisierelektroden oder Metallspitzen 22 befinden sich so nahe bei der Saug-Düsenöffnung 9 und der zu reinigenden Oberfläche 1, daß diese Ionen von Beschichtungspulverpartikeln und der zu reinigenden Oberfläche 1, falls sie ein anderes elektrisches Potential haben, elektrisch angezogen und dadurch elektrisch neutralisiert werden. Ungleichpolige Atome und Moleküle ziehen sich gegenseitig an, gleichpolige stoßen sich gegenseitig ab. Der Stabkörper 21 und die Reihe der Ionisierelektroden 22 erstrecken sich im wesentlichen über die gesamte Länge der Saug-Düsenöffnung 9 parallel zu dieser und parallel zu der zu reinigenden Oberfläche 1, wobei die Ionisierelektroden 22 in Richtung zu der zu reinigenden Oberfläche 1 aus dem Stabkörper 21 herausragen und ein spitzes Ende haben.

Die Räder 16 und die Ionisiervorrichtung 20 befinden sich, mit Bezug auf die Vorrichtungs-Bewegungsrichtung 4, hinter der Saugdüse 8. Ein Druckluftdüsenrohr 26 befindet sich mit Bezug auf die Vorrichtungs-Bewegungsrichtung 4 vor der Saugdüse 8 und ist am Gehäuse 6 befestigt. Das Druckluftdüsenrohr 26 und mindestens eine Reihe von in ihm gebildeten Druckluftdüsenöffnungen 28 erstreckt sich im wesentlichen über die gleiche Länge wie die Saug-Düsenöffnung 9 und bläst Druckluft 30 von einer nicht dargestellten Druckluftquelle vor der Saug-Düsenöffnung 9 derart gegen die zu reinigenden Oberfläche 1, daß an dieser Oberfläche 1 haftende Pulverpartikel gelöst und vom Saugluftstrom 14 in die Saug-Düsenöffnung 9 mitgerissen werden.

Die Ionisiervorrichtung 20 kann "berührungssicher" oder "nicht berührungssicher" ausgebildet sein. Bei der "berührungssicheren" Ausführungsform sind die Metallspitzen oder Ionisierelektroden 22 mit einem Hochspannungskabel kapazitiv verbunden. Dies hat zur Folge, daß ein nachteiliger elektrischer Hochspannungsschlag zwischen den Ionisierelektroden 22 und einer sie berührenden Person nicht auftreten kann. Bei der "nicht berührungssicheren" Ausführungsform sind die Metallspitzen oder Ionisierelektroden 22 mit dem Hochspannungskabel direkt verbunden, so daß die Ionisierelektroden 22 zum Schutz gegen eine Berührung durch Personen abgeschirmt sein müssen. Anstelle einer externen Hochspannungsquelle, welche über das genannte Hochspannungskabel mit den Ionisierelektroden 22 verbunden ist, entweder kapazitiv oder direkt, kann ein Hochspannungserzeuger in der Reinigungsvorrichtung 3 untergebracht und vom Gehäuse 6 getragen werden, dessen Hochspannungsausgang an die Ionisierelektroden 22 angeschlossen ist und dessen Niederspannungseingang über ein Niederspannungskabel an eine externe Niederspannungsquelle angeschlossen ist.

Die Räder 16 sind um mehr als 180° ihres Umfanges und auf ihren beiden Seiten bis über ihre Drehachsen 18 hinaus in Richtung zu der zu reinigenden Oberfläche 1 hin von Gehäusewänden 34 und 36 umgeben, welche die Räder 16 nahezu allseitig gegen herumfliegende Pulverpartikel abschirmen und für jedes Rad 16 eine Radkammer 38 bilden, aus welcher der Saugluftstrom 14, welcher in die Saug-Düsenöffnung 9 strömt, Pulver absaugt. Bei der Schnittdarstellung in Fig. 1 ist eine innere Gehäusewand 36 der Radkammern 38 nicht dargestellt, damit die anderen Teile deutlicher gezeigt werden können.

Die Räder 16, die Ionisiervorrichtung 20 mit den Ionisierelektroden 22, die Saugdüse 8, das Druckluft-Düsenrohr 26 und das Gehäuse 6 können relativ zueinander in der Höhe, seitlich und bezüglich ihrer Winkelstellung zueinander positionsveränderlich einstellbar sein. Damit ist auch der Abstand und die Winkelposition dieser Teile relativ zu der zu reinigenden Oberfläche 1 einstellbar.

Die Reinigungsvorrichtung 3 kann von einer Tragvorrichtung 40 getragen werden und über der zu reinigenden Oberfläche 1 in Arbeitsposition gebracht wegbewegt werden, beispielsweise mit Hilfe von einer oder mehreren expandierbaren Kolben-Zylindereinheiten 42.

Bei der dargestellten Ausführungsform berühren die Räder 16 die zu reinigenden Oberfläche 1 und diese Räder bestimmen auch den Abstand der einzelnen Teile der Reinigungsvorrichtung 3 von der zu reinigenden Oberfläche 1. Gemäß einer nicht dargestellten abgewandelten Ausführungsform kann die Reinigungsvorrichtung 3 auch berührungslos ausgebildet werden. Hierfür werden die Räder 16 weggelassen und die Reinigungsvorrichtung 3 wird nur von der Tragvorrichtung 40 getragen, ohne daß die Reinigungsvorrichtung 3 die zu reinigende Oberfläche 1 berührt.

Die Erfindung ist besonders für Kabinen geeignet, in welchen elektrostatisch aufgeladenes Pulver auf die zu beschichtenden Gegenstände gesprüht wird. Das Pulver wird durch Elektroden einer Pulversprühvorrichtung oder durch Reibung des Pulvers in der Pulversprühvorrichtung elektrostatisch aufgeladen. Die Elektroden sind in oder neben dem Weg des Pulvers angeordnet und an eine elektrische Hochspannung im Bereich von ungefähr 1 bis 140 kV angeschlossen. Dabei wird ein elektrisches Feld zwischen den Elektroden und dem zu beschichtenden Gegenstand erzeugt, der an ein anderes Potential, normalerweise an Erdpotential angeschlossen ist. Das elektrische Feld wirkt auch auf die Kabinenwände. Wenn die Kabinenwände, insbesondere deren inneren Oberflächen, aus elektrisch nicht leitendem Material bestehen, zum Beispiel Kunststoff, dann können elektrische Ladungen von ihnen nicht abfließen, die durch das elektrische Feld und/oder durch auftreffende Pulverpartikel entstanden sind. Beim Reinigen der Kabinenwände durch eine Reinigungsperson, zum Beispiel mit einem nassen Schwamm, werden solche elektrischen Ladungen über die Reinigungsperson nach Erdpotential abgeleitet. Die Erfindung vermeidet diese Nachteile, weil durch die Erfindung nicht nur die Pulverpartikel, sondern auch die Oberflächen der Kabine elektrisch neutralisiert oder entladen werden. Probleme, die sich durch Pulver ergeben, welches an den Kabinenwänden haftet, sind zum Beispiel in der EP-B-0 200 681 beschrieben.

## Patentansprüche

1. Reinigungsverfahren zum Entfernen von Partikeln von Oberflächen, enthaltend: elektrisches Neutralisieren von Partikeln auf der zu reinigenden Oberfläche durch Erzeugen von Ionen in der die Oberfläche umgebenden Luft durch elektrische Hochspannung derart, daß die Ionen von den Partikeln und der Oberfläche elektrisch angezogen werden, wenn diese Partikel und/oder diese Oberfläche ein anderes elektrisches Potential als die Ionen haben, und Absaugen der Partikel von der Oberfläche durch mindestens einen Saugluftstrom,
**dadurch gekennzeichnet,** daß dieses Reinigungsverfahren zum Entfernen von Beschichtungspulver von Oberflächen von Pulver-Sprühbeschichtungskabinen verwendet wird.

2. Reinigungsverfahren nach Anspruch 1,
**dadurch gekennzeichnet,** daß eine Pulverabsaugvorrichtung (8) und eine Ionisiervorrichtung (20), welche Luft in positive und negative Ionen aufspaltet, parallel zu der zu reinigenden Oberfläche (1) bewegt werden, während die zu reinigende Oberfläche (1) unbeweglich gehalten wird.

3. Reinigungsverfahren nach Anspruch 1 oder 2,
**dadurch gekennzeichnet,** daß es ohne mechanische Berührung der zu reinigenden Oberfläche (1) durchgeführt wird.

4. Verfahren nach Anspruch 2,
**dadurch gekennzeichnet,** daß die Absaugvorrichtung (8) und die Ionisiervorrichtung (20) während der Relativbewegung zu der zu reinigenden Oberfläche (1) auf dieser zu reinigenden Oberfläche (1) abgestützt (16) werden.

5. Reinigungsverfahren nach einem der vorhergehenden Ansprüche,
**dadurch gekennzeichnet,** daß die Pulverpartikel mit mindestens einem auf die zu reinigende Oberfläche (1) gerichteten Druckluftstrom (30) in der Nähe des Saugluftstromes von der zu reinigenden Oberfläche (1) weggeblasen und dann vom Saugluftstrom abgesaugt werden.

6. Reinigungsverfahren nach einem der Ansprüche 2 bis 5,
**dadurch gekennzeichnet,** daß die Absaugvorrichtung (8) und die Ionisiervorrichtung (20) parallel zu der zu reinigenden Oberfläche (1) derart bewegt werden, daß die Absaugvorrichtung (8) in Bewegungsrichtung vorderhalb vor der Ionisiervorrichtung (20) angeordnet ist und auf die zu reinigende Oberfläche (1) wirkt.

7. Reinigungsverfahren nach Anspruch 5 und 6,
**dadurch gekennzeichnet,** daß der Druckluftstrom (30) in Bewegungsrichtung (4) vorderhalb von der Saugvorrichtung (8) auf die zu reinigende Oberfläche (1) gerichtet wird.

8. Reinigungsvorrichtung für Beschichtungspulver zum Entfernen von Beschichtungspulver von Oberflächen einer Pulversprühbeschichtungskabine, mit einer parallel zu der zu reinigenden Oberfläche (1) bewegbaren Reinigungseinheit (3), zur Durchführung des Verfahrens nach einem der Ansprüche 1 bis 7,
**dadurch gekennzeichnet,** daß die Reinigungseinheit (3) eine Pulverabsaugvorrichtung (8) und eine Hochspannungs-Ionisiervorrichtung (20) aufweist, von welchen die Pulverabsaugvorrichtung (8) einen Saugluftstrom (14) auf der zu reinigenden Oberfläche (1) erzeugt, welcher Beschichtungspulver von dieser zu reinigenden Oberfläche (1) absaugt, und von welchen die Hochspannungs-Ionisiervorrichtung (20) mindestens eine Hochspannungs-Ionisierelektrode (22) aufweist, welche in der Luft auf der zu reinigenden Oberfläche (1) Ionen erzeugt, die sich mit anders geladenen Beschichtungspulverpartikeln und anders geladenen Molekülen der zu reinigenden Oberfläche (1) verbinden und dadurch diese elektrisch neutralisieren.

9. Reinigungsvorrichtung nach Anspruch 8,
**dadurch gekennzeichnet,** daß die Reinigungseinheit (3) eine Druckluft-Blasvorrichtung (26, 28) aufweist, welche einen Druckluftstrom (30) gegen die zu reinigenden Oberfläche (1) bläßt, derart, daß er an der zu reinigenden Oberfläche (1) haftende Pulverpartikel wegreißt, welche dann vom Saugluftstrom (14) der Pulverabsaugvorrichtung (8) abgesaugt werden.

10. Reinigungsvorrichtung nach Anspruch 8 oder 9,
**dadurch gekennzeichnet,** daß die Reinigungseinheit (3) Räder (16) hat, welche die zu reinigenden Oberfläche (1) kontaktieren und die übrigen Teile der Reinigungseinheit (3) auf einem vorbestimmten Abstand von der zu reinigenden Oberfläche (1) halten.

11. Reinigungsvorrichtung nach Anspruch 10,
**dadurch gekennzeichnet,** daß jedes Rad (16) in einer Radkammer (38) untergebracht ist, und daß die Radkammern (38) derart ausgebildet sind, daß aus ihnen Pulverpartikel von der Absaugvorrichtung (8) abgesaugt werden.
